# EUROPEAN PATENT SPECIFICATION

(11) **EP 2 696 957 B1**
(45) Date of publication and mention of the grant of the patent: **25.07.2018**
(21) Application number: 12715901.0
(22) Date of filing: 05.04.2012
(51) Int. Cl.: B01D 53/26, F25B 21/00

(54) **APPARATUS AND METHOD FOR THE REFRIGERATION OF A GAS FLOW, IN PARTICULAR COMPRESSED GAS**
VORRICHTUNG UND VERFAHREN ZUR KÜHLUNG EINES GASSTROMS, INSBESONDERE VON DRUCKGAS
APPAREIL ET PROCÉDÉ DE RÉFRIGÉRATION D'UN FLUX GAZEUX, EN PARTICULIER D'UN GAZ COMPRIMÉ

(30) Priority: 11.04.2011 IT PN20110023
(43) Date of publication of application: 19.02.2014
(73) Proprietor: PARKER HANNIFIN S.r.l., 20094 Corsico (MI) (IT)
(72) Inventor: FAVERO, Chiara, 35010 Perarolo di Vigonza (PD) (IT)
(74) Representative: Giugni, Valter
(86) International application number: PCT/EP2012/056373
(87) International publication number: WO 2012/139983

(56) References cited:
- US-A1- 2002 174 665
- US-A1- 2005 047 284
- US-A1- 2009 178 418
- US-B1- 6 516 622

## Description

The present description regards an apparatus and a method for drying gas, in particular air, and typically compressed air, produced in air compressors.

It is well known that one of the problems facing compressed-air manufacturers is caused by the presence of moisture in the air stream used. In fact, the compressed air leaving the final stage of an air compressor contains a quantity of water in the form of water vapour that can condense and favour the formation of rust, or generate other problems.

Therefore it is useful and often necessary to eliminate such moisture content as much as possible.

The apparatuses and procedures used to eliminate the moisture present in the compressed air are numerous and widely known in the art. Here, reference is made in particular to Italian Patent Application No. PN2011 A000019 in the name of the same filing company and to the priority patents cited and discussed therein, referred to here for conciseness.

According to the known art, compressed air dryers with a refrigerating circuit reduce the water vapour, thanks to the forced cooling of the air and to the consequent and subsequent condensation and removal of the condensed moisture during the air-cooling phase.

In brief, the typical refrigeration cycles for obtaining said vapour condensation are traditional cycles, in which refrigeration is achieved through the refrigeration and thus the liquefaction of a refrigerant gas that was previously compressed, and thus heated, by a suitable compressor. This fluid in the liquid stage is then made to evaporate and expand in a suitable evaporator, in which the surrounding heat is captured.

This evaporator is built in a suitable heat exchanger, and thus the heat drawn by the evaporator is substantially drawn from another branch of the same heat exchanger in which circulates the compressed air to be dehumidified.

This air is naturally refrigerated, and as an immediate consequence any moisture contained in it is condensed, collected and removed from the air stream.

This solution, although effective and safe from the industrial point of view, has however some fundamental drawbacks that can be summarized as:
a) Environmental impact: the presence of refrigerating gases, although markedly reduced in recent years, causes the depletion of the ozone layer over the polar regions; in fact, the refrigerating gases used were almost exclusively chlorofluorocarbon gases (CFC) blamed for breaking up the ozone molecules, and thus favouring the phenomenon known as the "ozone hole".
b) Energy economy and efficiency: the classic cycles of cold production and transfer are in fact strongly penalized by a low overall energy efficiency caused by both heat/cold losses in the transportation of the relative carrier gases, and by the less than optimal energy efficiency of the compressor;
c) Low gas/liquid energy transfer coefficient: for this reason, in many systems heat transfer cannot be achieved "on demand", and in a highly competitive industrial context it cannot be produced ahead of time and held until it is used; in addition, due to such low heat transfer coefficient it would be necessary to use large heat exchange areas, with obvious negative impacts on the costs and effectiveness of the system;
d) Cost and industrial complexity: in fact, the classic cold production cycle is a thermodynamic cycle, and thus it requires rather complicated and costly machines like, typically, a gas compressor.

To overcome these and other drawbacks, refrigerating techniques based on the "magneto-caloric effect", also known by other names, such as for example "magnetic refrigeration", have been adopted.

This phenomenon, which is in itself well known, has been used to build refrigerating machines for various uses, and is widely disclosed.

The following patents can be cited in this regard:
- US 2009/0025398 - US 2008/8236172
- US 2010/0000228 - US 2009/0178418.

These patents disclose solutions for specific applications that generally require a fairly constant heating load; however, if the heating load varies between very high values, as from 0% to 100% of the nominal load, as is the case of a refrigerator for drying compressed air for industrial applications, these solutions are decidedly inadequate.

In fact, the machines and the systems for magnetic refrigeration need to be able to work, both for reasons of simple mechanical control and for thermal reasons, in the most stable conditions possible; therefore, if these machines and systems are required to promptly adapt to the conditions of a profoundly and rapidly variable heating load, the result is both a significant increase in costs and control of the refrigerating system, and a significant reduction of its energy efficiency.

Thus, the main objective of the present invention is to implement a process and an associated apparatus that utilizes the technologies of magnetic refrigeration suitable to dry an air flow, particularly compressed air, suitable to eliminate or at least significantly reduce the drawbacks described above, consequent to the possibility of large variations in the heating load.

This process and apparatus must be achievable with freely available and competitive materials and technologies, and must ensure a safe and suitably workable result.

This and other objectives are attained by a process and an apparatus achieved and operating according to the enclosed claims.

Characteristics and advantages of the invention will become evident from the following description, given by way of non-limiting example, with reference to the enclosed drawings, in which:
- Fig. 1 is a block diagram of a magnetic refrigeration system suitable to carry out the process according to the invention;
- Fig. 2 is a symbolic and simplified graph of the temperature oscillations in a first defined position of a refrigerator according to the invention;
- Fig. 3 is a symbolic and simplified graph of the temperature oscillations in a second defined position of a refrigerator according to the invention;
- Fig. 4A is a block diagram of a magnetic refrigeration system in an improved variant of the embodiment of Fig. 1;
- Fig. 4B is a block diagram of a magnetic refrigeration system in an improved variant of the embodiment of Fig. 4A.

Although the present invention refers specifically to an apparatus and a relative refrigerating circuit, for a clearer explanation reference will also be made to a process that can be implemented by said apparatus.

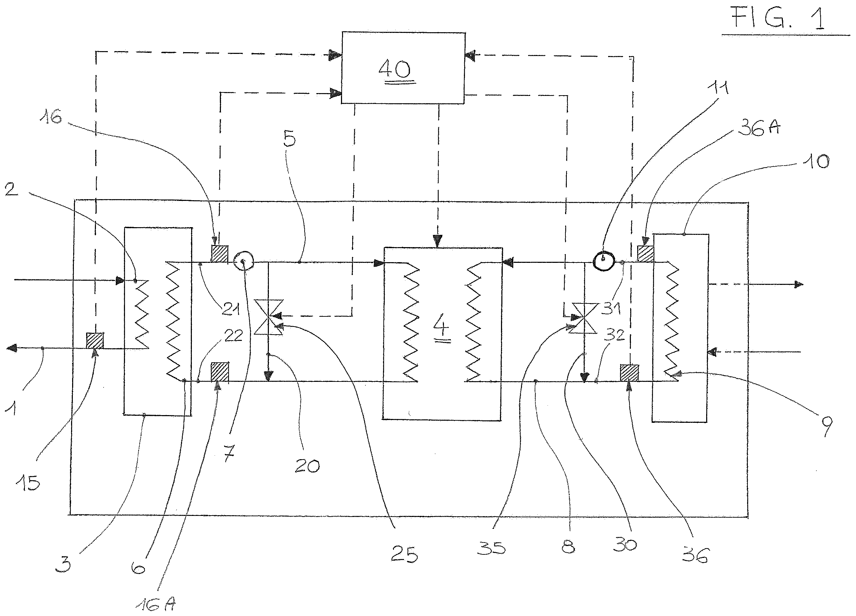

With reference to Fig. 1, the apparatus for the refrigeration of a gas flow according to the invention includes:
- a first conduit 1, within which is ducted said flow, which crosses a first branch 2 of a first heat exchanger 3, provided with two distinct branches;
- a means 4 for the magnetic refrigeration of a refrigerating fluid;
- a second closed-circuit conduit 5, which crosses the second branch 6 of said first heat exchanger 3 and a first portion of said magnetic refrigeration means 4;
- a first pump 7 (working primarily as a circulator) arranged in said second conduit 5;
- a third closed-circuit conduit 8, which crosses a second portion 6 of said magnetic refrigeration means 4, and enters into a first branch 9 of a second heat exchanger 10; a fluid suitable for heat exchange is made to flow in said third conduit 8;
- a second pump 11 arranged in said third conduit 8 and suitable to circulate therein a suitable heat exchange fluid.

Said second and third conduit 5, 8 are independent and are not connected to each other, not even in their respective inlet and outlet portions into said common magnetic refrigeration means 4.

In addition, said magnetic refrigeration means 4 is a known device, provided with unspecified operating and control mean, that operates in accordance to known modes.

Therefore, said means 4 is not included in the present invention, and thus it is referred to here as a black box in which said two second and third conduit, respectively 5 and 8, enter and exit.

Since, as mentioned above, the main objective of the invention is to guarantee a correct operation of the apparatus, and thus to ensure its continued operation at a rate as much as possible constant even as the heating load varies, a first by-pass channel 20 is arranged connecting:
- the inlet gate 21 of said second conduit 5, included between said first pump 7 and said means for the magnetic refrigeration 4,
- with the relative outlet gate 22.

In addition, said first channel 20 includes a respective, selectively controllable first valve 25.

This first part of the invention operates as follows: when the heating load present in the flow of compressed gas that flows through the first conduit 1 drops (it could also fall to zero), then evidently its temperature drops appreciably, and risks falling to a level that freezes the moisture contained therein.

To avoid such a temperature drop, consequent to the reduced heat absorption, naturally it will be necessary to also reduce the quantity of cold delivered in the first heat exchanger 3 by the fluid that flows in said second conduit 8.

Since the means for the magnetic refrigeration 4 is maintained in constant conditions of operation, the first valve 25 arranged in the first by-pass channel 20 is opened, so that the flow of refrigerated fluid passing through the second conduit 5 is in large part redirected into said first by-pass channel 20, and returns into circulation in the same second conduit 5, entering again into the first heat exchanger 3.

Thus, this fluid that flows through said by-pass channel 20 does not pass through the means for the magnetic refrigeration 4, and therefore it is not cooled by this means.

As an immediate consequence of this, in the second branch 6 of the first heat exchanger 3 is created a continuous circulation of cooling fluid, a large part of which does not come from the refrigerating means 4, and thus that part is not cooled.

Consequently, the temperature of the first heat exchanger 3 is prevented from falling too low, and the final and desired consequence of this is also that the temperature of the fluid in the first conduit 1 that flows through the first branch 2 of the first heat exchanger 3 is maintained above a predetermined safety level.

Two different manners can be chosen for detecting the temperature pattern in said first heat exchanger:
a) on said first conduit 1 is arranged a first temperature sensor 15, suitable to measure the temperature of the gas at the outflow from said first heat exchanger 3, and suitable for transmitting a signal representative of the measured temperature to command and control means 40, shown only symbolically.
b) on said second conduit 5, at the outlet from said first heat exchanger 3 and before the pump 7 is arranged a second temperature sensor 16 suitable to transmit a signal representative of the temperature measured on said second conduit 5 to said command and control means 40.

In this manner, when the temperature on the first conduit 1 drops below a predefined level, and this fact can be revealed by both the sensor 15 on said first conduit and the sensor 16 on said second conduit that measures a temperature correlated to the temperature measured by the first sensor 15, said command and control means operate, with known modes and means, to open the valve 25 and thereby effectively control, both directly and indirectly, the temperature on the first conduit 1, in a manner substantially independent of the heating load present therein.

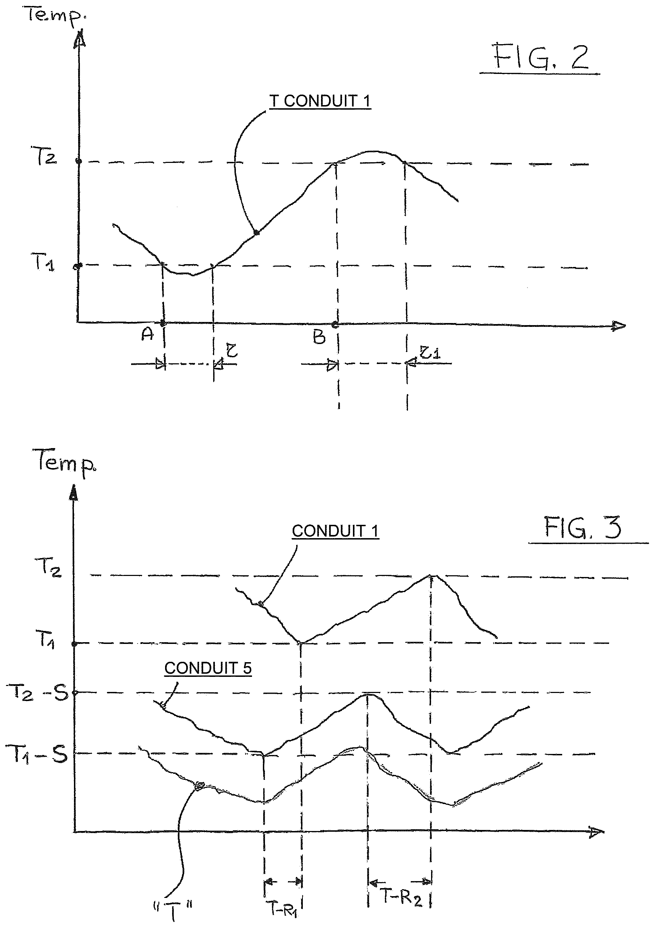

These phenomena are shown, in a symbolic and simplified manner, in Figures 2 and 3, which illustrate the graphs of the temperature patterns in the first conduit 1 and in the second conduit 5, as detected by the respective temperature sensors 15 and 16.

As can be seen in Fig. 2, when the temperature of the first conduit 1 tends to fall and to approach a value "T1" that is not to be exceeded (for the well-known risk of icing), then said command and control means 40, in the basis of the temperature detected by said sensor 15, open said first valve 25 (instant "A"), which thereby allows the fluid to pass into said first by-pass channel 20, which therefore in a large part is no longer cooled by said cooling means 4.

An immediate consequence of this is that the temperature of the fluid in the second conduit 5 does not fall any further, but tends to stabilize (as a function of other important factors, which are not listed here) and therefore this thermal behaviour is also transferred by the first heat exchanger 3 to the temperature of the air in the conduit 1; as can be observed from the graph of Fig. 2, the temperature in the conduit 1 tends to increase, or not to decrease further, with a delay "r" from said instant "A".

Inversely, and advantageously, the limit of the maximum temperature "T2", detected by the sensor 15, is also defined; when such limit is reached, said command and control means 40 operate to close the valve 25 again (instant "B") and thus to restore, with a relative delay "r1", the new desired temperature pattern and the normal conditions of operation of the apparatus.

In essence, the temperature profile in the conduit 1 is maintained, with successive swings, between the "T1" and "T2" values defined above through a sequence of openings/closings of the valve 25 controlled by said control means 40.

With reference to Fig. 3, since the temperature in the conduit 1 is closely correlated through the heat exchanger 3 with the temperature in the conduit 5, it is also possible to adjust the operation of the apparatus on the basis of the temperature of the latter.

Thus, the opening/closing of the first valve 25 is carried out on the basis of the temperature pattern in the second conduit 5.

In Fig. 3 is thus illustrated the temperature pattern in said second conduit 5, which must vary, with modes and methods in all ways similar to those explained previously, between respective values "T1_S" and "T2_S", and wherein the instants in which the valve 25 is opened and closed are now indicated respectively by "A_T" and "B_T".

To make it easier to understand the relative thermal phenomena, in the same Fig. 3 is also symbolically shown the consequent temperature pattern in the conduit 1, in which the temperature "turning" instants, that is, the attainment of the minimum "A" and maximum "B" temperatures, measured on the conduit 1 are delayed with a delay time "T-R1" and "T-R2" from the respective instants "A_T" and "B_T" on the conduit 5.

In addition, still with reference to Fig. 1, the measurement of the temperature on then conduit 5 taken by the sensor 16 can be replaced, or supplemented, with a corresponding measurement taken by a similar sensor 16-A arranged in the same conduit 5 but at the inlet to the heat exchanger 3 (and not at the outlet from the same).

It can be readily appreciated that these two temperatures are closely correlated with each other, as they are both measured on the same conduit 5, but at the respective inlet and outlet gates of the heat exchanger 3.

In fact, with reference to Fig. 3, the temperature measurable by said sensor 16-A is indicated by the pattern of the line "T", which is strictly correlated with the line of "CONDUIT 5", but which shows a temperature that is appreciably lower than the latter. Obviously, this is readily explained by the fact that that the temperature measured by the sensor 16-A is at the outlet from the magnetic refrigeration means 4, and therefore in the coldest part of the conduit 5.

It is also possible that, when particularly cold ambient conditions affect said second heat exchanger 10, and when the heating load required in the first conduit 1 is low, said cooling means 4 becomes excessively cooled.

In fact, in these circumstances there is the greatest cooling of the fluid in the second conduit 5, and this leads naturally to the cooling of the whole apparatus 4, and in particular of its magnetic mass in which said second conduit 5 is in thermal relationship.

The cooling of the means 4 thus reflects on the temperature of the fluid suitable for heat exchange that flows in said third conduit 8, which is consequently cooled in a correlated manner.

When said fluid is transferred into the second heat exchanger 10, it is cooled further, and this marked cooling is reflected upstream along the whole chain consisting of the conduits, the cooling means 4 and the two heat exchangers 3 and 10.

Due to the effect of this cooling in cascade, it may happen that the temperature in the first conduit 1 becomes again too low. To avoid such risk, a second by-pass channel 30 is provided to connect:
- the inlet gate 31 of said third conduit 8, included between said second pump 11 and said means for magnetic refrigeration 4,
- with the relative outlet gate 32.

In addition, said second channel 30 includes a respective selectively controllable second valve 35.

Finally, on the inlet part of said third conduit 8 is arranged a third temperature sensor 36 suitable to measure the temperature of the fluid flowing therein. A signal representative of this temperature is then transmitted to said command and control means 40, and compared with a predefined value, naturally corresponding to a correlated temperature value.

If the temperature value transmitted by said third sensor is lower than a predefined value, then the second valve 35 is opened.

In this manner, when the temperature in the third conduit 8 falls below a predefined level, and this occurrence can be detected by the sensor 36 on said third conduit, said command and control means act, with known manners and means, to open the valve 35.

This action forces the fluid that flows out of said second heat exchanger 10 to circulate mainly in said second by-pass channel 30 and thus to return to the third heat exchanger 10. The consequence of this action is therefore that said means of magnetic refrigeration 4 is not cooled excessively, and in turn it does not cool excessively the fluid in the second conduit 5, and also in cascade in the first conduit 1.

To the expert in the field it will also be evident that the type of operation, and the operating logic, applied by said command and control means 40 on said second valve 35 on the basis of the signals sent by said third sensor 36 are in all ways similar to what already previously explained in relation to the first and second conduit 1 and 5, and thus for the sake of conciseness they will not be repeated here.

Similarly to the case of the sensor 16-A, the temperature on the third conduit 8 can be measured by mounting on this conduit a suitable sensor 36-A near the outlet gate of the second heat exchanger 10.

It will also be evident, for the same considerations made above, that the type of operation, and the operating logic, exercised by said command and control means 40 on said second valve 35 on the basis of the signals sent by said sensor 36-A are in all ways similar to what was previously explained in relation to the sensors 16 and 16-A, and to their signals, and therefore for conciseness they will not be repeated here.

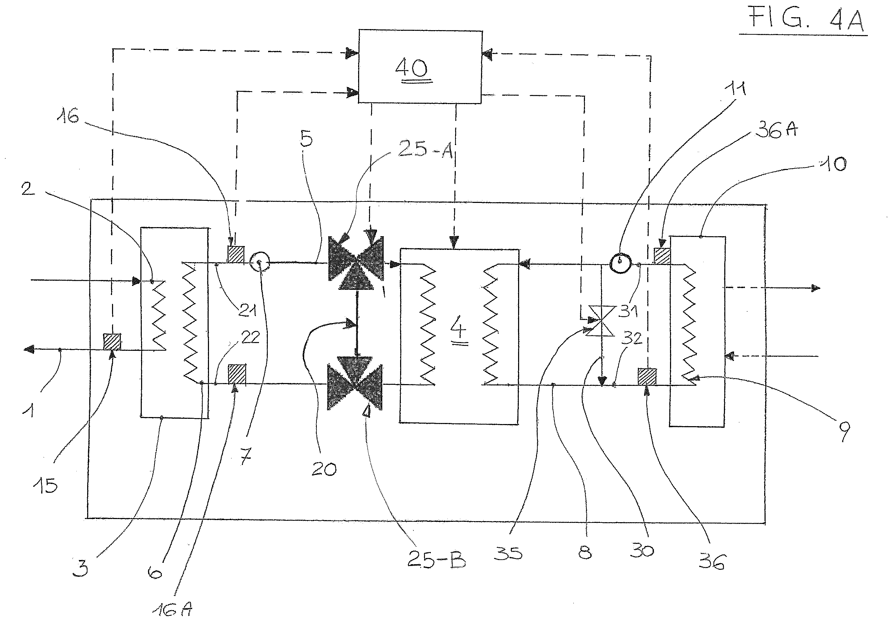

With reference to Fig. 4A, two different and improved variants of embodiments will be presented and discussed here.

In the first variant, said first valve 25, arranged on said first by-pass channel 20 is advantageously substituted by a first three-way valve 25-A (and 25-B, as will be better explained later).

The valve 25-A is arranged, downstream of said pump 7, and therefore at the outlet of said first heat exchanger 3, in the connection between:
- said first by-pass channel 20,
- and said second conduit 5,
- and thus it can, if suitably driven by said command and control means 40, adjust and balance the flow of liquid that is directed between the same second conduit 5 toward the cooling means 4 and toward said first by-pass channel 20.

In fact, intermediate conditions could take place wherein it is highly desirable that the flow of refrigerant be split in a definable and precise manner between the conduit 5 and the by-pass channel 20.

This condition can, for example, occur as a function of the heating load required, so that, if the heating load involves low but not minimal values, then the complete by-pass on the first by-pass channel 20 becomes excessive (the heat exchanger 3 is not sufficiently cooled).

Conversely, the exclusion of the by-pass 20 would lead to an excessive cooling of the fluid by the magnetic refrigeration means 4, with a consequent excessive cooling on the first heat exchanger 3.

It is also evident that said three-way valve 25-A can be substituted with a similar first three-way valve 25-B in the other connection between the same first by-pass channel 20 and said second conduit 5, as shown in Fig. 4A.

In fact, their complete controllability also ensures the consequent and desired splitting of the refrigerating fluid between the second conduit 5 and said first by-pass channel 20, independently of the position of said two three-way valves 25-A and 25-B.

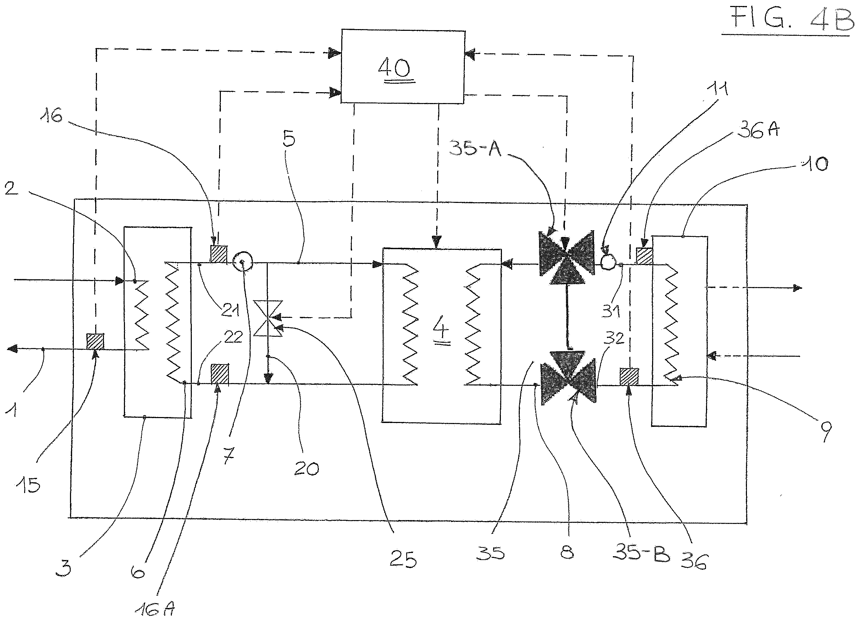

Finally, with reference to Fig. 4B, on the second by-pass channel 30 can be arranged two similar second three-way valves 35-A and 35-B, arranged between two connections located at the opposite ends of said second by-pass channel 30.

For a person skilled in the field it will be evident that the same considerations made for the three-way valves 25-A and 25-B can also be applied to said three-way valves 35-A and 35-B, to the third conduit 8, and to their operation, and therefore their description is not necessary and will be omitted.

## Claims

1. Apparatus for the refrigeration of a gas flow, comprising:
- a first conduit (1), wherein said gas flow is introduced and which passes across a first branch (2) of a first heat exchanger (3),
- means for the magnetic refrigeration (4) of a cooling liquid,
- a second conduit for a closed circulation (5), which enters the second branch (6) of said first heat exchanger (3) and a first portion of said means (4) for the magnetic refrigeration,
- first pumping means (7) arranged inside said second conduit (5) and able of making a cooling fluid to circulate in,
- a third conduit for a closed circulation (8), which passes across a second portion of said means (4) for the magnetic refrigeration and enters a first branch (9) of a second heat exchanger (10),
- second pumping means (11) arranged inside said third conduit (8) and able of making a fluid to flow for the thermal exchange,
- said second and third circuits (5, 8) being independent and not connected to each other,
**characterized in that** it also comprises a first by-pass channel (20) linking:
- the inlet gate of said second conduit (5), comprised between said first pumping means (7) and said means (4) for the magnetic refrigeration,
- to the respective outlet gate connected, through the same second conduit, to said first heat exchanger (3),
**wherein said first by-pass channel (20) comprises a respective first valve (25) which is selectively controllable,**
**and wherein said means (4) for the magnetic refrigeration is maintained in constant condition for operation.**

2. Apparatus according to claim 1, **characterized in that** the first valve (25) is substituted by a first three-way valve (25-A,25-B) which is is arranged in one of the connections of the second by-pass channel (20) and the second conduit (5).

3. Apparatus according to the preamble of claim 1, **characterized in that** it comprises a second by-pass channel (30) connecting:
- the inlet gate of said third conduit (8), positioned between said second pumping means (11) and said means (4) for the magnetic refrigeration,
- to the respective outlet gate linked, through said same third conduit (8), to said second heat exchanger (10).

4. Apparatus according to claim 3, **characterized in that** said second by-pass channel (30) includes a respective second valve (35) which is selectively controllable.

5. Apparatus according to claim 4, **characterized in that** the second valve (35) is substituted by a second three-way valve (35-A,35-B) which is arranged in one of the connections of the second by-pass channel (30) and the third conduit (8).

6. Apparatus according to any of the previous claims or to any combination of them, **characterized in that** it is provided with command and control means (40) able of selectively control at least one of the following devices:
- said first and/or second pumping means (7, 11),
- said first and/or said second valve (25, 35),
- said first and/or second three-way valve (25-A, 25-B, 35-A, 35-B).

7. Apparatus according to claim 6, **characterized in that** on said first conduit (1) a first temperature sensor (15) is arranged, which is preferably apt of measuring the temperature of the gas exiting from said first heat exchanger (3), and able of sending a signal representative of said measured temperature to said command and control means (40).

8. Apparatus according to claim 6, **characterized in that** on said third conduit (8):
- at the exiting gate from said means (4) for the magnetic refrigeration and before of said second heat exchanger (10),
- or alternately at the outlet of said second heat exchanger (10),
a respective third temperature sensor (36, 36-A) is arranged, which is able of sending a signal representative of the measured temperature to said command and control means (40).

9. Apparatus according to claim 6, **characterized in that** on said second conduit (5),
- at the outlet from said first heat exchanger (3) and before of said first pumping means (7),
- or alternately at the at the inlet of said second heat exchanger (10), a respective second temperature sensor (16) is arranged, which is able of sending a signal representative of the measured temperature to said command and control means (40).

10. Method for the cooling of a gas pumped into a conduit which enters an apparatus according to any of claims 7 to 9, **characterized in that,** if the temperatures measured by said first or second temperature sensors (15, 16, 16-A) are lower to respective and pre-defined temperature amounts (T1, T1-S), said first valve (25) is opened, or said first three-way valve (25-A, 25-B) valve is opened.

11. Method for the cooling of a gas pumped into a conduit which enters an apparatus according to any of claims 7 to 9, **characterized in that,** if the temperatures measured by said third temperature sensors (36, 36-A) are lower to respective and pre-defined temperature amounts, said second valve (35) is opened, or said second three-way valve (35-A, 35-B) valve is opened.

## Patentansprüche

1. Vorrichtungen zur Kühlung eines Gasstroms, mit:
- einer ersten Leitung (1), in die der Gasstrom eingeführt wird und die einen ersten Zweig (2) eines ersten Wärmetauschers (3) durchläuft,
- einer Einrichtung für die magnetische Kühlung (4) einer Kühlflüssigkeit,
- einer zweiten Leitung für eine geschlossene Kreis (5), die in den zweiten Zweig (6) des ersten Wärmetauschers (3) und einen ersten Bereich der Einrichtung (4) für die magnetische Kühlung eintritt,
- einer ersten Pumpeneinrichtung (7), die in der zweiten Leitung (5) angeordnet und in der Lage ist, eine Umwälzung eines Kühl-Fluids hervorzurufen in,
- einer dritten Leitung für einen geschlossenen Kreis (8), die über einen zweiten Bereich der Einrichtung (4) für die magnetische Kühlung verläuft und in einen ersten Zweig (9) eines zweiten Wärmetauschers (10) eintritt,
- einer zweiten Pumpeneinrichtung (11), die in der dritten Leitung (8) angeordnet und in der Lage ist zu veranlassen, dass ein Fluid zum Zwecke des Wärmeaustausches strömt,
- wobei der zweite und der dritte Kreis (5, 8) unabhängig und nicht miteinander verbunden sind,
**dadurch gekennzeichnet, dass**
die Vorrichtung ferner einen ersten Umgehungskanal (20) aufweist, der verbindet:
- den Eintrittspunkt der zweiten Leitung (5), der zwischen der ersten Pumpeneinrichtung (7) und der Einrichtung (4) für die magnetische Kühlung vorgesehen ist,
- mit dem entsprechenden Austrittspunkt, der über die gleiche zweite Leitung mit dem ersten Wärmetauscher (3) verbunden ist,
wobei der erste Umgehungskanal (20) ein entsprechendes erstes Ventil (25) aufweist, das selektiv ansteuerbar ist,
und wobei die Einrichtung (4) für die magnetische Kühlung konstant betriebsbereit gehalten wird.

2. Vorrichtung nach Anspruch 1, **dadurch gekennzeichnet, dass** das erste Ventil (25) durch ein erstes 3-Wege-Ventil (25-A, 25-B) ersetzt ist, das in einer der Verbindungen des zweiten Umgehungskanals (20) und der zweiten Leitung (5) angeordnet ist.

3. Vorrichtungen gemäß dem Oberbegriff des Anspruchs 1, **dadurch gekennzeichnet, dass** sie einen zweiten Umgehungskanal (30) aufweist, der verbindet:
- den Eintrittspunkt der dritten Leitung (8), der zwischen der zweiten Pumpeneinrichtung (11) und der Einrichtung (4) für die magnetische Kühlung angeordnet ist,
- mit dem entsprechenden Austrittspunkt, der über die gleiche dritte Leitung (8) mit dem zweiten Wärmetauscher (10) verbunden ist.

4. Vorrichtung nach Anspruch 3, **dadurch gekennzeichnet, dass** der zweite Umgehungskanal (30) ein entsprechendes zweites Ventil (35) aufweist, das selektiv ansteuerbar ist.

5. Vorrichtung nach Anspruch 4, **dadurch gekennzeichnet, dass** das zweite Ventil (35) durch ein zweites 3-Wege-Ventil (35-A, 35-B) ersetzt ist, das in einer der Verbindungen des zweiten Umgehungskanals (30) und der dritten Leitung (8) angeordnet ist.

6. Vorrichtung nach einem der vorhergehenden Ansprüche oder einer Kombination davon, **dadurch gekennzeichnet, dass** sie mit einer Befehls-und Steuereinrichtung (40) versehen ist, die ausgebildet ist, mindestens eine der folgenden Komponenten selektiv anzusteuern;
- die erste und/oder die zweite Pumpeneinrichtung (7, 11),
- das erste und/oder das zweite Ventil (25, 35),
- das erste und/oder das zweite 3-Wege-Ventil (25-A, 25-B, 35-A, 35-B).

7. Vorrichtung nach Anspruch 6, **dadurch gekennzeichnet, dass** an der ersten Leitung (1) ein erster Temperatursensor (15) angeordnet ist, der vorzugsweise in der Lage ist, die Temperatur des aus dem ersten Wärmetauscher (3) austretenden Gases zu messen, und der in der Lage ist, ein die gemessene Temperatur repräsentierendes Signal zu der Befehls-und Steuereinrichtung (40) zu senden.

8. Vorrichtung nach Anspruch 6, **dadurch gekennzeichnet, dass** an der dritten Leitung (8):
- an dem Austrittspunkt der Einrichtung (4) für die magnetische Kühlung und vor dem zweiten Wärmetauscher (A10),
- oder alternativ an dem Auslass des zweiten Wärmetauschers (10),
ein entsprechender dritter Temperatursensor (36, 36-A) angeordnet ist, der in der Lage ist, ein die gemessene Temperatur repräsentierendes Signal zu der Befehls-und Steuereinrichtung (40) zusenden.

9. Vorrichtung nach Anspruch 6, **dadurch gekennzeichnet, dass** an der zweiten Leitung (5),
- an dem Auslass des ersten Wärmetauschers (3) und vor der ersten Pumpeneinrichtung (7),
- oder alternativ an dem Einlass des zweiten Wärmetauschers (10),
ein entsprechender zweiter Temperatursensor (16) angeordnet ist, der in der Lage ist, ein die gemessene Temperatur repräsentierendes Signal zu der Befehls-und Steuereinrichtung (40) zu senden.

10. Verfahren zum Kühlen eines Gases, das in eine Leitung gepumpt wird, die in eine Vorrichtung nach einem der Ansprüche 7 bis 9 eintritt, **dadurch gekennzeichnet, dass**, wenn die von dem ersten oder dem zweiten Temperatursensor (15, 16, 16-A) gemessenen Temperaturen niedriger als entsprechende und vordefinierte Temperaturwerte (T1, T1-S) sind, dann das erste Ventil (25) oder das erste 3-Wege-Ventil (25-A, 25-B) geöffnet wird.

11. Verfahren zur Kühlung eines Gases, das in eine Leitung gepumpt wird, die in eine Vorrichtung nach einem der Ansprüche 7 bis 9 eintritt, **dadurch gekennzeichnet, dass**, wenn die von den dritten Temperatursensoren (36, 36-A) gemessenen Temperaturen niedriger als entsprechende und vordefinierte Temperaturwerte sind, dann das zweite Ventil (35) oder das zweite 3-Wege-Ventil (35-A, 35-B) geöffnet wird.

## Revendications

1. Dispositif pour la réfrigération d'un flux de gaz, comprenant:
- un premier conduit (1), dans lequel ledit flux de gaz est introduit et qui passe à travers une première section (2) d'un premier échangeur de chaleur (3),
- un système (4) de réfrigération magnétique d'un liquide de refroidissement,
- un second conduit de circulation fermé (5), qui pénètre la seconde branche (6) dudit premier échangeur de chaleur (3) et une première partie dudit système (4) de réfrigération magnétique,
- des premiers moyens de pompage (7) disposés à l'intérieur dudit second conduit (5) et aptes à y faire circuler un fluide de refroidissement,
- un troisième conduit de circulation fermée (8), qui passe à travers une seconde partie dudit système (4) de réfrigération magnétique et pénètre une première section (9) d'un second échangeur de chaleur (10),
- des seconds moyens de pompage (11) disposés à l'intérieur dudit troisième conduit (8) et capables de faire circuler un fluide pour l'échange thermique,
- lesdits seconds et troisième circuits (5, 8) étant indépendants et non reliés l'un à l'autre,
**caractérisé en ce qu'**il comprend en outre un premier canal de dérivation (20) reliant:
- le passage d'entrée dudit second conduit(5), compris entre lesdits premiers moyens de pompage (7) et ledit système (4) de réfrigération magnétique,
- au passage de sortie respectif connecté, à travers le même second conduit, audit premier échangeur de chaleur (3),
dans lequel ledit premier canal de dérivation (20) comprend une première soupape respective (25) qui peut être commandée sélectivement,
et dans lequel ledit système (4) de réfrigération magnétique est maintenu constamment en condition d'opération.

2. Dispositif selon la revendication 1, **caractérisé en ce que** la première soupape (25) est remplacée par une première vanne à trois voies (25-A, 25-B) qui est agencée dans l'une des connexions du second canal de dérivation (20) et du second conduit (5).

3. Dispositif selon le préambule de la revendication 1, **caractérisé en ce qu'**il comprend un second canal de dérivation (30) reliant:
- le passage d'entrée dudit troisième conduit (8), positionnée entre lesdits seconds moyens de pompage (11) et ledit système(4) de réfrigération magnétique,
- au passage de sortie respective reliée, à travers ledit même troisième conduit (8), audit second échangeur de chaleur (10).

4. Dispositif selon la revendication 3, **caractérisé en ce que** ledit second canal de dérivation (30) comprend une seconde soupape respective (35) qui peut être commandée sélectivement.

5. Dispositif selon la revendication 4, **caractérisé en ce que** la seconde soupape (35) est remplacée par une seconde vanne à trois voies (35-A, 35-B) qui est agencée dans l'une des connexions du second canal de dérivation (30) et du troisième conduit (8).

6. Dispositif selon l'une quelconque des revendications précédentes ou toute combinaison de ceux-ci, **caractérisé en ce qu'**il est muni de moyens de commande et de contrôle (40) aptes à commander sélectivement au moins l'un des dispositifs suivants:
- lesdits premiers et/ou seconds moyens de pompage (7, 11),
- ladite première et/ou ladite seconde soupape (25, 35),
- ladite première et/ou ladite second vanne à trois voies (25-A, 25-B, 35-A, 35-B).

7. Dispositif selon la revendication 6, **caractérisé en ce que** sur ledit premier conduit (1) est disposé un premier capteur de température (15) qui est de préférence apte à mesurer la température du gaz sortant dudit premier échangeur de chaleur (3) et capable d'envoyer un signal représentatif de ladite température mesurée auxdits moyens de commande et de contrôle (40).

8. Dispositif selon la revendication 6, **caractérisé en ce que,** sur ledit troisième conduit (8):
- au passage de sortie dudit système (4) de réfrigération magnétique et avant ledit second échangeur de chaleur (10),
- ou, alternativement, à la sortie dudit second échangeur de chaleur (10),
un troisième capteur de température respectif (36, 36-A) est disposé, qui est capable d'envoyer un signal représentatif de la température mesurée auxdits moyens de commande et de contrôle (40).

9. Dispositif selon la revendication 6, **caractérisé en ce que,** sur ledit second conduit (5),
- à la sortie dudit premier échangeur de chaleur (3) et avant lesdits premiers moyens de pompage (7),
- ou, alternativement, à l'entrée dudit second échangeur de chaleur (10),
un second capteur de température respectif (16) est agencé, qui est capable d'envoyer un signal représentatif de la température mesurée auxdits moyens de commande et de contrôle (40).

10. Procédé de refroidissement d'un gaz pompé dans un conduit qui pénètre un dispositif selon l'une quelconque des revendications 7 à 9, **caractérisé en ce que,** si les températures mesurées par lesdits premier ou second capteurs de température (15, 16, 16-A) sont inférieures à des valeurs de température respectives et prédéfinies (T1, T1-S), ladite première soupape (25) est ouverte, ou ladite première vanne à trois voies (25-A, 25-B) est ouverte.

11. Procédé de refroidissement d'un gaz pompé dans un conduit qui pénètre un appareil selon l'une quelconque des revendications 7 à 9, **caractérisé en ce que,** si les températures mesurées par lesdits troisièmes capteurs de température (36, 36-A) sont inférieures à des températures respectives et prédéfinies, ladite seconde soupape (35) est ouverte, ou ladite seconde vanne à trois voies (35-A, 35-B) est ouverte.
